# EUROPEAN PATENT APPLICATION

(11) **EP 4 807 666 A1**
(43) Date of publication of application: **16.09.2026**
(21) Application number: 24926761.8
(22) Date of filing: 10.10.2024
(51) Int. Cl.: G06T 5/90

(54) **IMAGE PROCESSING METHOD, IMAGE PROCESSING APPARATUS, ELECTRONIC DEVICE, COMPUTER-READABLE STORAGE MEDIUM AND COMPUTER PROGRAM PRODUCT**

(30) Priority: 29.02.2024 CN 202410234352
(71) Applicant: Tencent Technology (Shenzhen) Company Limited, Shenzhen, Guangdong 518057 (CN)
(72) Inventor: YANG, Weiming, Shenzhen, Guangdong 518057 (CN); WANG, Shaoming, Shenzhen, Guangdong 518057 (CN); GUO, Runzeng, Shenzhen, Guangdong 518057 (CN); WANG, Jun, Shenzhen, Guangdong 518057 (CN); HONG, Zheming, Shenzhen, Guangdong 518057 (CN); HOU, Jinkun, Shenzhen, Guangdong 518057 (CN)
(74) Representative: Gunzelmann, Rainer
(86) International application number: PCT/CN2024/123991
(87) International publication number: WO 2025/179895

(57) **Abstract**

This application provides an image processing method, an image processing apparatus, an electronic device, a computer-readable storage medium, and a computer program product. The method includes: performing light-sensing parameter prediction on an input image to obtain a first light-sensing parameter of the input image; determining, from a correspondence between candidate light-sensing parameters and candidate expected color temperatures, an expected color temperature corresponding to the light-sensing parameter; determining a current color temperature of the input image, and determining a color temperature error rate of the input image based on the expected color temperature and the current color temperature; updating the first light-sensing parameter based on the color temperature error rate to obtain a second light-sensing parameter; and adjusting the input image through the second light-sensing parameter to obtain an adjusted input image.

## Description

### RELATED APPLICATION

This application is based upon and claims priority to Chinese Patent Application No. 2024102343527, filed on February 29, 2024, which is incorporated herein by reference in its entirety.

### FIELD OF THE TECHNOLOGY

This application relates to the technical field of artificial intelligence, and in particular, to an image processing method, an image processing apparatus, an electronic device, a computer-readable storage medium, and a computer program product.

### BACKGROUND OF THE DISCLOSURE

With the rapid development of artificial intelligence technologies, artificial intelligence plays an increasingly important role in image processing. The field of image processing includes accurate capture, calibration, and reproduction of image colors to ensure accurate transmission of color information and authenticity of visual effects. In current image processing, a light source color temperature of an image cannot be accurately estimated, and color correction cannot be performed on the image. Challenges, such as color casts, arise in high-color-temperature or low-color-temperature environments, especially under extreme color temperature conditions, thereby reducing the authenticity of the image color temperature.

The related art lacks an effective solution for accurately perceiving the color temperature and improving the accuracy of the image color temperature in different color temperature scenes.

### SUMMARY

Embodiments of this application provide an image processing method, an image processing apparatus, an electronic device, a computer-readable storage medium, and a computer program product, capable of improving the accuracy of an image color temperature.

Technical solutions of the embodiments of this application are implemented as follows.

The embodiments of this application provide an image processing method, which is performed by an electronic device, and includes:
performing light-sensing parameter prediction on an input image to obtain a first light-sensing parameter of the input image;
determining, from a correspondence between candidate light-sensing parameters and candidate expected color temperatures, an expected color temperature corresponding to the light-sensing parameter;
determining a current color temperature of the input image, and determining a color temperature error rate of the input image based on the expected color temperature and the current color temperature;
updating the first light-sensing parameter based on the color temperature error rate to obtain a second light-sensing parameter; and
adjusting the input image through the second light-sensing parameter to obtain an adjusted input image.

The embodiments of this application provide an image processing apparatus, including:
a light-sensing prediction module, configured to perform light-sensing parameter prediction on an input image to obtain a first light-sensing parameter of the input image;
a color temperature error rate acquisition module, configured to determine, from a correspondence between candidate light-sensing parameters and candidate expected color temperatures, an expected color temperature corresponding to the light-sensing parameter; and determine a current color temperature of the input image, and determine a color temperature error rate of the input image based on the expected color temperature and the current color temperature; and
an image update module, configured to update the first light-sensing parameter based on the color temperature error rate to obtain a second light-sensing parameter; and adjust the input image through the second light-sensing parameter to obtain an adjusted input image.

The embodiments of this application provide an electronic device, including:
a memory, configured to store computer-executable instructions; and
a processor, configured to implement, when executing the computer-executable instructions stored in the memory, the image processing method provided in the embodiments of this application.

The embodiments of this application provide a computer-readable storage medium, having a computer program or computer-executable instructions stored therein, and the computer program or the computer-executable instructions, when executed by a processor, implementing the image processing method provided in the embodiments of this application.

The embodiments of this application provide a computer program product, including a computer program or computer-executable instructions, the computer program or the computer-executable instructions, when executed by a processor, implementing the image processing method provided in the embodiments of this application.

The embodiments of this application have the following beneficial effects.

Light-sensing parameter prediction is performed on the input image to obtain the first light-sensing parameter of the input image. From the correspondence between the candidate light-sensing parameters and the candidate expected color temperatures, the expected color temperature corresponding to the light-sensing parameter is determined, and the color temperature error rate of the input image is determined based on the expected color temperature and the current color temperature. The first light-sensing parameter is updated based on the color temperature error rate to obtain the second light-sensing parameter. The input image is adjusted through the second light-sensing parameter to obtain the adjusted input image. In this way, by updating the first light-sensing parameter, color temperature adjustment can be performed on input images in some extreme color temperature environments, thereby improving the accuracy of the image color temperature.

### BRIEF DESCRIPTION OF THE DRAWINGS

FIG. 1 is a schematic structural diagram of an image processing system architecture according to an embodiment of this application.
FIG. 2 is a schematic structural diagram of an electronic device according to an embodiment of this application.
FIG. 3A is a first schematic flowchart of an image processing method according to an embodiment of this application.
FIG. 3B is a second schematic flowchart of an image processing method according to an embodiment of this application.
FIG. 3C is a third schematic flowchart of an image processing method according to an embodiment of this application.
FIG. 3D is a fourth schematic flowchart of an image processing method according to an embodiment of this application.
FIG. 3E is a fifth schematic flowchart of an image processing method according to an embodiment of this application.
FIG. 3F is a sixth schematic flowchart of an image processing method according to an embodiment of this application.
FIG. 3G is a seventh schematic flowchart of an image processing method according to an embodiment of this application.
FIG. 3H is an eighth schematic flowchart of an image processing method according to an embodiment of this application.
FIG. 3I is a ninth schematic flowchart of an image processing method according to an embodiment of this application.
FIG. 3J is a tenth schematic flowchart of an image processing method according to an embodiment of this application.
FIG. 3K is an eleventh schematic flowchart of an image processing method according to an embodiment of this application.
FIG. 4 is a schematic flowchart of palm-scan image correction according to an embodiment of this application.
FIG. 5 is a schematic diagram of a camera collector according to an embodiment of this application.
FIG. 6 is a schematic diagram of a to-be-collected palm print according to an embodiment of this application.
FIG. 7 is a principal diagram of data enhancement according to an embodiment of this application.
FIG. 8 is a principal diagram of blocking according to an embodiment of this application.
FIG. 9 is a schematic diagram of model construction according to an embodiment of this application.
FIG. 10 is a principal diagram of parameter update according to an embodiment of this application.
FIG. 11 is a schematic diagram of ambient color temperature perception and estimation according to an embodiment of this application.

The foregoing "first" and "second" are merely used for distinguishing different solutions, and do not represent superiorities of the solutions or priorities in an implementation process.

### DESCRIPTION OF EMBODIMENTS

To make the objectives, technical solutions, and advantages of this application clearer, this application will be described in further detail below with reference to the accompanying drawings. The described embodiments are not to be considered as a limitation to this application. All other embodiments obtained by a person skilled in the art without inventive efforts shall fall within the protection scope of this application.

The term, involved in the following description, "some embodiments" describes subsets of all possible embodiments. However, "some embodiments" may be the same subset or different subsets of all the possible embodiments, and may be combined with each other without conflict.

The term, involved in the following description, "first/second/third" is merely intended to distinguish similar objects rather than describe specific orders. The "first/second/third" is interchangeable in proper circumstances to enable the embodiments of this application described herein to be implemented in other orders than those illustrated or described herein.

In the embodiments of this application, the term "module" or "unit" refers to a computer program having a predetermined function or a part of the computer program, works together with other relevant parts to achieve a predetermined objective, and may be all or partially implemented through software, hardware (such as a processing circuit or a memory), or a combination thereof. Similarly, one processor (or a plurality of processors or memories) may be configured to implement one or more modules or units. In addition, each module or unit may be a part of an overall module or unit containing a function of the module or unit.

During example application of relevant data collection and processing in the embodiments of this application, the informed consent or individual consent of a personal information subject needs to be acquired in strict accordance with the requirements of laws and regulations of related nations, and the subsequent data use and processing behavior is carried out within the scope of authorization of laws and regulations and the personal information subject.

Unless otherwise defined, meanings of all technical and scientific terms used in the embodiments of this application are the same as those usually understood by a person skilled in the technical field. Terms used in the embodiments of this application are merely intended to describe objectives of the embodiments of this application, but are not intended to limit this application.

Before the embodiments of this application are further described in detail, nouns and terms involved in the embodiments of this application are described. The nouns and terms involved in the embodiments of this application are applicable to the following explanations.
1) A light-sensing parameter is configured for adjusting a color temperature of an image. By adjusting the color temperature of the image, a color difference caused by an ambient light temperature is balanced, so that a white object can be correctly represented as white in any lighting conditions.
2) A color temperature is configured for describing a color of a light source. That is, a blackbody emits light of different colors when heated to different temperatures. A unit of the color temperature is Kelvin (K).
3) A color space is configured for describing and representing a color of an image. Different color spaces have different color ranges and application fields. According to different application scenes, types of color spaces include: a red-green-blue (RGB) color space, a hue-saturation-value (HSV) color space, a luminance-chrominance (Lab) color space, and a chrominance-luminance (YUV) color space.
4) Mapping refers to mapping input data to a latent space. The latent space usually has a lower dimension, and can represent an implicit mode of original data.
5) Remapping refers to mapping a latent vector back to an original data space to generate an output similar to the input data. The latent vector is a sample obtained by sampling in the latent space.
6) White balance is a concept in photography and image processing. A main function of white balance is to ensure that in photographs captured under different light sources, a white or gray object can present truly white or gray, rather than being affected by a color temperature of ambient light to cause color casts.

In the related art, color temperature adjustment based on a camera module (image signal processor (ISP)) fails to accurately perceive the ambient color temperature. In addition, covering all color temperature scenes using a constant light-sensing parameter results in color casts under some high-color-temperature or low-color-temperature conditions.

Based on the foregoing analysis, the applicant finds that a method for performing color correction on an image through a constant light-sensing parameter in the related art cannot improve the accuracy of the image color temperature. For the foregoing problem, the embodiments of this application provide an image processing method and apparatus, an electronic device, a computer-readable storage medium, and a computer program product, capable of improving the accuracy of the image color temperature.

The image processing method recorded in the embodiments of this application may be applied to various fields, such as palm-scan color temperature correction, facial color temperature correction, and professional photography. That is, the image processing method in the embodiments of this application is not limited to a particular field.

Exemplary application of an electronic device provided in the embodiments of this application is described below. The device provided in the embodiments of this application may be implemented as a terminal or as a server. Exemplary application in which the device is implemented as a server is described below.

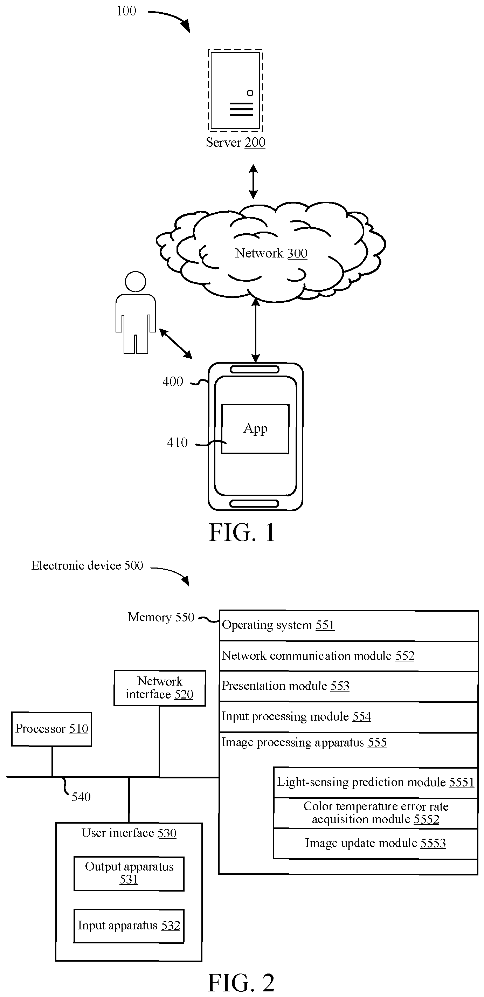

FIG. 1 is a schematic architectural diagram of an image processing system according to an embodiment of this application. To support an image processing application, a terminal (a terminal 400 is exemplarily shown) is connected to a server 200 through a network 300. The network 300 may be a wide area network, a local area network, or a combination of the two.

The terminal 400 is configured to transmit input data to the server 200 through the network 300. The server 200 is configured to perform light-sensing parameter prediction on an input image to obtain a first light-sensing parameter of the input image; determine, from a correspondence between candidate light-sensing parameters and candidate expected color temperatures, an expected color temperature corresponding to the light-sensing parameter; determine a current color temperature of the input image, and determine a color temperature error rate of the input image based on the expected color temperature and the current color temperature; update the first light-sensing parameter based on the color temperature error rate to obtain a second light-sensing parameter; and adjust the input image through the second light-sensing parameter, and return an obtained adjusted input image to the terminal 400. The terminal 400 displays the obtained adjusted input image through a graphical interface 410.

An example in which the terminal 400 performs image processing is described below.

In some embodiments, the terminal 400 may independently complete an image processing task. For example, the terminal 400 is configured to perform light-sensing parameter prediction on an input image to obtain a first light-sensing parameter of the input image; determine, from a correspondence between candidate light-sensing parameters and candidate expected color temperatures, an expected color temperature corresponding to the light-sensing parameter; determine a current color temperature of the input image, and determine a color temperature error rate of the input image based on the expected color temperature and the current color temperature; update the first light-sensing parameter based on the color temperature error rate to obtain a second light-sensing parameter; and adjust the input image through the second light-sensing parameter, and display an obtained adjusted input image through the graphical interface 410.

In an implementation scene, the server or the terminal may perform light-sensing parameter prediction on a facial image to obtain a first light-sensing parameter of the facial image; determine, from a correspondence between candidate light-sensing parameters and candidate expected color temperatures, an expected color temperature corresponding to the light-sensing parameter; determine a current color temperature of the facial image, and determine a color temperature error rate of the facial image based on the expected color temperature and the current color temperature; update the first light-sensing parameter based on the color temperature error rate to obtain a second light-sensing parameter; and adjust the facial image through the second light-sensing parameter to obtain an adjusted facial image.

In an implementation scene, the server or the terminal may perform light-sensing parameter prediction on a palm picture to obtain a first light-sensing parameter of the palm picture; determine, from a correspondence between candidate light-sensing parameters and candidate expected color temperatures, an expected color temperature corresponding to the light-sensing parameter; determine a current color temperature of the palm picture, and determine a color temperature error rate of the palm picture based on the expected color temperature and the current color temperature; update the first light-sensing parameter based on the color temperature error rate to obtain a second light-sensing parameter; and adjust the palm picture through the second light-sensing parameter to obtain an adjusted palm picture.

In some embodiments, the server 200 may be an independent physical server, may be a server cluster or a distributed system including a plurality of physical servers, or may be a cloud server that provides basic cloud computing services such as a cloud service, a cloud database, cloud computing, a cloud function, cloud storage, a network service, cloud communication, a middleware service, a domain name service, a security service, a content delivery network (CDN), and a big data and artificial intelligence platform.

The terminal 400 may be a smartphone, a tablet computer, a notebook computer, a desktop computer, a smart speaker, a smart watch, a smart voice interaction device, a smart appliance, an in-vehicle terminal, an aircraft, or the like, but is not limited thereto. The terminal may be directly or indirectly connected to the server in a wired or wireless communication manner. This is not limited in the embodiments of this application.

FIG. 2 is a schematic structural diagram of an electronic device according to an embodiment of this application. An electronic device 500 shown in FIG. 2 may be the terminal 400 or the server 200 in FIG. 1. The electronic device 500 includes: at least one processor 510, a memory 550, and at least one network interface 520. Assemblies in the server 200 are coupled together through a bus system 540. The bus system 440 is configured to implement connection and communication between the assemblies. In addition to a data bus, the bus system 540 further includes a power bus, a control bus, and a state signal bus. However, for clear description, all types of buses in FIG. 2 are marked as the bus system 540.

The processor 510 may be an integrated circuit chip with a signal processing capability, such as a general-purpose processor, a digital signal processor (DSP), or another programmable logic device, discrete gate, transistor logic device, or discrete hardware assembly. The general-purpose processor may be a microprocessor, any conventional processor, or the like.

The user interface 530 includes one or more output apparatuses 531 that enable presentation of media content, including one or more speakers and/or one or more visual displays. The user interface 530 further includes one or more input apparatuses 532, including user interface components that facilitate user input, such as a keyboard, a mouse, a microphone, a touchscreen display, a camera, and other input buttons and controls.

In some embodiments, when the terminal 400 independently completes an image processing task in this embodiment, the server 200 provided in this embodiment of this application does not include the user interface 530.

The memory 550 may be removable, non-removable, or a combination thereof. Exemplary hardware devices include a solid-state memory, a hard disk drive, a compact disc (CD) drive, and the like. The memory 550 alternatively includes one or more storage devices physically located away from the processor 510.

The memory 550 includes a volatile memory or a non-volatile memory, or may include both the volatile memory and the non-volatile memory. The non-volatile memory may be a read only memory (ROM), and the volatile memory may be a random access memory (RAM). The memory 550 described in this embodiment of this application is intended to include any suitable type of memory.

In some embodiments, the memory 550 can store data to support various operations. Examples of the data include a program, a module, and a data structure, or their subsets or supersets, which are exemplified below.

An operating system 551 includes a system program configured for processing various basic system services and performing hardware-related tasks, such as a framework layer, a core library layer, or a driver layer, to implement various basic businesses and process the hardware-based tasks.

A network communication module 552 is configured to connect to other computing devices via one or more (wired or wireless) network interfaces 520. The exemplary network interfaces 520 include: Bluetooth, wireless fidelity (WiFi), a universal serial bus (USB), and the like.

A presentation module 553 is configured to enable presentation of information (for example, a user interface for operating peripheral devices and displaying content and information) via one or more output apparatuses 531 (for example, a display or a speaker) associated with the user interface 530.

In some embodiments, when the terminal 400 independently completes an image processing task, the server 200 provided in this embodiment of this application may not include the presentation module 553.

An input processing module 554 is configured to detect one or more user inputs or interactions from one of the one or more input apparatuses 532, and translate the detected input or interaction. In some embodiments, when the terminal 400 independently completes an image processing task in this embodiment, the server 200 provided in this embodiment of this application may not include the presentation module 553.

In some embodiments, the apparatus provided in the embodiments of this application may be implemented in a software manner. FIG. 2 shows an image processing apparatus 555 stored in the memory 550. The image processing apparatus 555 may be software in the form of a program, a plug-in, or the like, and includes the following software modules: a light-sensing prediction module 5551, a color temperature error rate acquisition module 5552, and an image update module 5553. These modules are logical, and therefore may be arbitrarily combined or further split according to implemented functions. The functions of the modules will be described below.

In other embodiments, the apparatus provided in the embodiments of this application may be implemented in a hardware manner. As an example, the apparatus provided in the embodiments of this application may be a processor in the form of a hardware decoding processor and programmed to perform the image processing method provided in the embodiments of this application. For example, the processor in the form of the hardware decoding processor may adopt one or more application specific integrated circuits (ASICs), a DSP, a programmable logic device (PLD), a complex programmable logic device (CPLD), a field-programmable gate array (FPGA), or other electronic elements.

In the following examples of image processing, a person skilled in the art may apply the image processing method provided in the embodiments of this application to image processing according to the understanding of the following description.

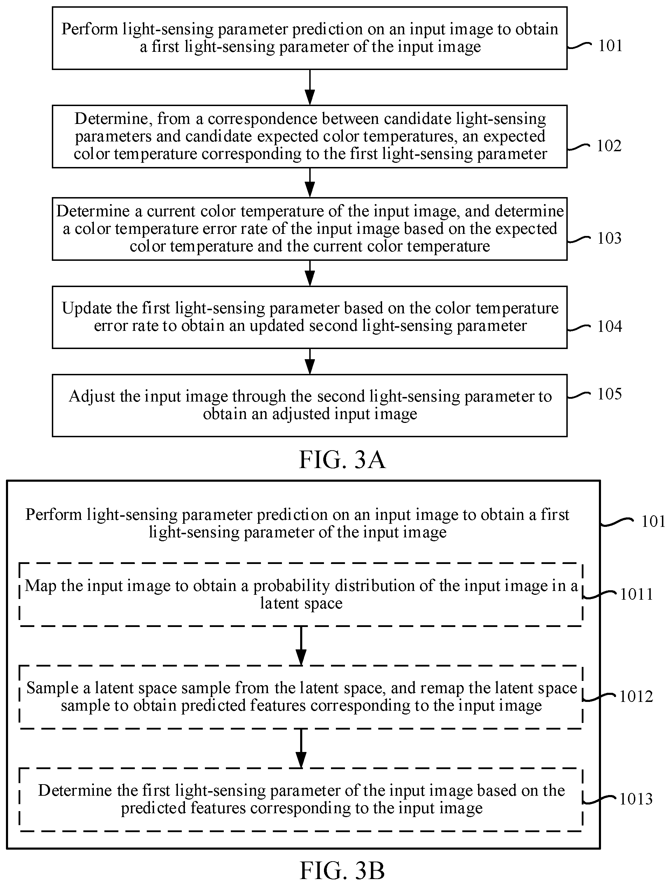

FIG. 3A is a first schematic flowchart of an image processing method according to an embodiment of this application. Descriptions are provided with reference to operations shown in FIG. 3A. The image processing method provided in this embodiment of this application may be independently implemented by a server or a terminal, or may be cooperatively implemented by the server and the terminal. An example in which the image processing method is cooperatively implemented by the server and the terminal is used below for description.

Operation 101: Perform light-sensing parameter prediction on an input image to obtain a first light-sensing parameter of the input image.

In some embodiments, according to an actual application scene, the input image may be an image that is related to the application scene and includes any content. The light-sensing parameter is configured for adjusting the color balance of an image, so that a white object presents white under different lighting conditions, and other colored objects present their true colors. The light-sensing parameter is configured for representing a gain of each channel of the input image. The light-sensing parameter prediction refers to mapping according to the input image and determining the light-sensing parameter based on a mapping result. The light-sensing parameter may be represented as a reciprocal of a pixel value of the mapping result. Alternatively, the light-sensing parameter is obtained by performing weighted summation on reciprocals of pixel values of the mapping result.

Exemplarily, in an RGB color space, the light-sensing parameter is represented as a color gain of [1.2, 1, 1.5], where 1.2 is a color gain of the input image in a red channel, 1 is a color gain of the input image in a green channel, and 1.5 is a color gain of the input image in a blue channel. Color correction may be performed on the input image (for example, [R, G, B]) based on the light-sensing parameter to obtain an adjusted input image [1.2*R, 1*G, 1.5*B].

In some embodiments, FIG. 3B is a second schematic flowchart of an image processing method according to an embodiment of this application. Operation 101 shown in FIG. 3A may be implemented through operation 1011 to operation 1013 in FIG. 3B. Details are described below.

Operation 1011: Map the input image to obtain a probability distribution of the input image in a latent space.

In some embodiments, the probability distribution of the input image in the latent space may be a Gaussian distribution. The latent space refers to a low-dimensional space, and a point in the latent space may represent a compressed representation of original high-dimensional image data (for example, an RGB image).

In some embodiments, the input image is encoded to obtain encoding features, and the encoding features are mapped based on a fully-connected layer of an encoder to obtain an average value and a variance of the input image in the latent space, thereby obtaining the Gaussian distribution of the input image in the latent space, i.e., the probability distribution of the input image in the latent space. The Gaussian distribution of an image refers to distribution characteristics of pixel intensity values of the image conforming to or approximating the Gaussian distribution, which is alternatively referred to as a normal distribution. Image analysis and processing may be performed more effectively by understanding and using the Gaussian distribution characteristics of the image.

Operation 1012: Sample a latent space sample from the latent space, and remap the latent space sample to obtain predicted features corresponding to the input image.

The latent space sample conforms to the probability distribution of the input image in the latent space.

In some embodiments, a noise vector is randomly sampled from the standard normal distribution. Then, the average value and the variance of the input image in latent space are used for transformation to obtain a latent space sample, and the latent space sample is remapped based on a decoder to obtain the predicted features corresponding to the input image. The predicted feature and the input image have a same dimension. Regarding the sampling, for example, a noise vector may be randomly sampled from the standard normal distribution. Then, the average value and the variance of the input image in the latent space are acquired based on its probability distribution. A product of the noise vector and the standard deviation (the square root of the variance) of the input image in the latent space is calculated. The product is added to the corresponding mean, to obtain a sample in the latent space. That is, the sample value is equal to the average value of the input image plus a product of the noise vector and the square root of the variance of the input image.

Operation 1013: Determine the first light-sensing parameter of the input image based on the predicted features corresponding to the input image.

In some embodiments, the light-sensing parameter of the predicted features is determined as the first light-sensing parameter of the input image.

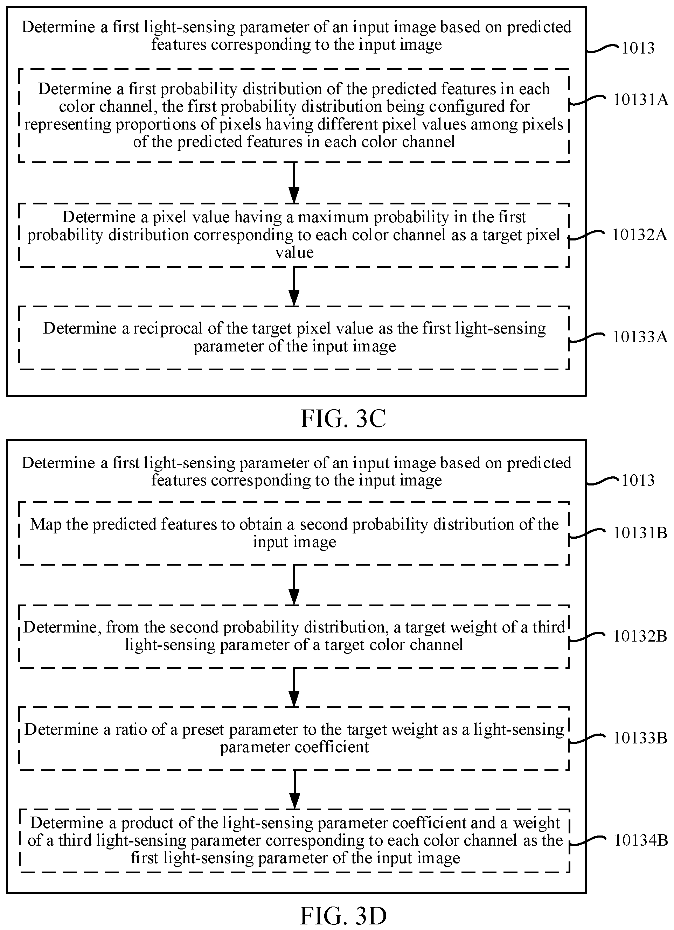

In some embodiments, the following processing is performed on each color channel in a color space corresponding to the predicted features. FIG. 3C is a third schematic flowchart of an image processing method according to an embodiment of this application. Operation 1013 shown in FIG. 3B may be implemented through operation 10131A to operation 10133A in FIG. 3C. Details are described below.

Operation 10131A: Determine a first probability distribution of the predicted features in each color channel, the first probability distribution being configured for representing proportions of pixels having different pixel values among pixels of the predicted features in each color channel.

In some embodiments, proportions of pixels having different pixel values among all pixels of the predicted feature are determined in each color channel to obtain the first probability distribution corresponding to each color channel.

Exemplarily, using a red (R) color channel of the input image as an example, a value of the red channel of the input image is [[0, 1], [1, 2]]. Statistics collection is performed on the number of pixels having different pixel values. There is one pixel value of 0, two pixel values of 1, and one pixel value of 2, to obtain proportions [0.25, 0.5, 0.25] of pixels having different pixel values among the pixels of the predicted features.

Operation 10132A: Determine a pixel value having a maximum probability in the first probability distribution corresponding to each color channel as a target pixel value.

Exemplarily, using the red color channel of the input image as an example, a first probability distribution of the red color channel is obtained as [0.25, 0.5, 0.25]. A pixel value having the maximum probability is acquired as 1, and 1 is determined as the target pixel value.

Operation 10133A: Determine a reciprocal of the target pixel value as the first light-sensing parameter of the input image.

Exemplarily, using the red color channel of the input image as an example, the target pixel value of the red color channel is obtained as 0.8, and a reciprocal 1.25 of the target pixel value is determined as the first light-sensing parameter of the input image in the red color channel.

In this embodiment of this application, the input image is mapped to a Gaussian distribution space, so that the light-sensing parameter of the image may be predicted and adjusted more accurately. Under complex lighting conditions, different color channels may be affected to varying degrees. The first light-sensing parameters are determined for different color channels, respectively, thereby helping improve color reproduction, avoiding color casts, and improving the accuracy of determining the light-sensing parameters.

In some embodiments, FIG. 3D is a fourth schematic flowchart of an image processing method according to an embodiment of this application. Operation 1013 shown in FIG. 3B may be implemented through operation 10131B to operation 10134B in FIG. 3D. Details are described below.

Operation 10131B: Map the predicted features to obtain a second probability distribution of the input image.

The second probability distribution is configured for representing a weight of a third light-sensing parameter of each color channel corresponding to the input image.

In some embodiments, the second probability distribution of the input image is a proportion of the third light-sensing parameter of each color channel.

Exemplarily, the predicted features are mapped and encoded to obtain encoded predicted features, and the encoded predicted features are mapped based on the fully-connected layer to obtain that weights of the light-sensing parameters are [0.3, 0.2, 0.5].

Operation 10132B: Determine, from the second probability distribution, a target weight of a third light-sensing parameter of a target color channel.

In some embodiments, a preset target color channel (for example, a red color channel) is selected from color channels corresponding to the input image (for example, RGB channels of the input image in an RGB color space), and the target color channel is one of the color channels corresponding to the input image.

Operation 10133B: Determine a ratio of a preset parameter to the target weight as a light-sensing parameter coefficient.

In some embodiments, a ratio of the value 1 to the target weight is determined as the light-sensing parameter coefficient.

In some embodiments, the following processing is performed on each color channel in the color space corresponding to the input image. Referring to operation 10134B, a product of the light-sensing parameter coefficient and the weight of the third light-sensing parameter corresponding to each color channel is determined as the first light-sensing parameter of the input image.

Exemplarily, the weight of the third light-sensing parameter corresponding to each color channel is [0.3, 0.2, 0.5], and it is obtained that a third light-sensing parameter coefficient when the target color channel is a blue color channel is 2. The light-sensing parameter coefficient is multiplied by the weight of the third light-sensing parameter corresponding to each color channel to obtain the first light-sensing parameter [0.6, 0.4, 1] of the input image.

In this embodiment of this application, the latent space sample in the latent space is remapped, and the first light-sensing parameter of the input image is determined based on the predicted features obtained through remapping, thereby facilitating the color temperature adjustment of the input image. The light-sensing parameter of the input image is determined through a weighted sum of light-sensing parameters corresponding to different color channels, thereby improving the accuracy of determining the light-sensing parameters.

Reference is still made to FIG. 3A. Operation 102: Determine, from a correspondence between candidate light-sensing parameters and candidate expected color temperatures, an expected color temperature corresponding to the light-sensing parameter.

In some embodiments, the correspondence between the candidate light-sensing parameters and the candidate expected color temperatures may be linear, or may be non-linear, and specifically depends on characteristics of an illumination device and an application scene. The correspondence between the candidate light-sensing parameters and the candidate expected color temperatures is preset. In the correspondence, the candidate light-sensing parameters and the candidate expected color temperatures are in a one-to-one correspondence. The expected color temperature is a color temperature that is preset according to an actual use scene. The expected color temperature matches a requirement of an actual application scene. For example, in an illumination design in a general environment, the expected color temperature may be a color temperature close to natural light, for example, 5,000 K to 6,000 K. Light in this color temperature range is close to a color temperature of midday sunlight, and a clear visual effect can be provided. An image in this color temperature range can be more accurately identified by a convolutional neural network model configured for image processing.

Operation 103: Determine a current color temperature of the input image, and determine a color temperature error rate of the input image based on the expected color temperature and the current color temperature.

In some embodiments, the color temperature error rate may be an absolute difference or a relative difference between the current color temperature and the expected color temperature. The absolute difference is an absolute value of a difference between the current color temperature and the expected color temperature, and the relative difference is an absolute error percentage between the current color temperature and the expected color temperature or a mean square error percentage between the current color temperature and the expected color temperature. A method for acquiring the color temperature error rate is not limited in this embodiment of this application.

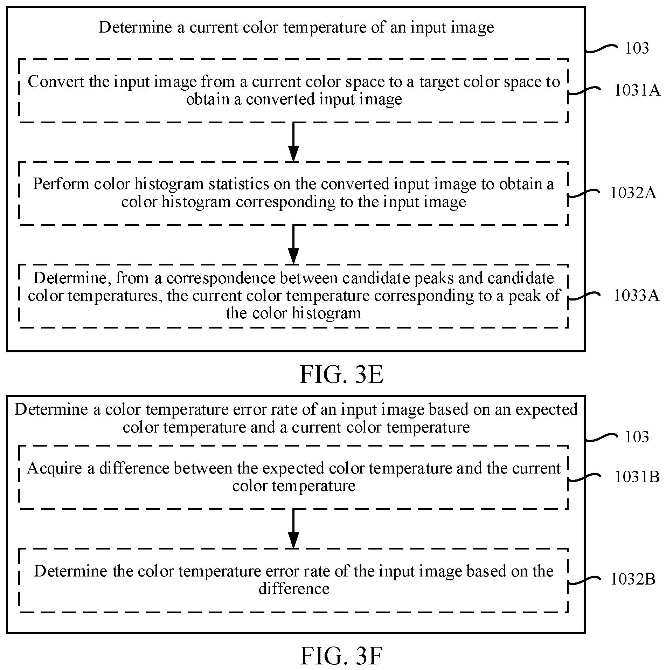

In some embodiments, FIG. 3E is a fifth schematic flowchart of an image processing method according to an embodiment of this application. The determining a current color temperature of the input image in operation 103 of FIG. 3A may be implemented through operation 1031A to operation 1033A in FIG. 3E.

Operation 1031A: Convert the input image from a current color space to a target color space to obtain a converted input image.

In some embodiments, a color space of an image refers to a mathematical model or a coordinate system configured for representing and storing color information in the image. The color space defines how to describe a color in a numerical form, including a composition, a range, and a representation method of the color. Different color spaces are applicable to different application scenes and devices. Types of the color spaces include: an RGB color space, an HSV color space, a luminance-chrominance (Lab) color space, and a chrominance-luminance (YUV) color space.

The current color space is different from the target color space. The current color space is determined according to a camera capturing an input picture in an actual application scene. For example, if an input image is collected through an RGB camera, the current color space of the input image is the RGB color space. The target color spaces may be different according to different application scenes.

Exemplarily, when the application scene pays more attention to the color of the input image, the input image is converted from the current color space to the HSV color space. When the application scene pays more attention to the luminance of the input image, the input image is converted from the current color space to the luminance-chrominance (Lab) color space.

Operation 1032A: Perform color histogram statistics on the converted input image to obtain a color histogram corresponding to the input image.

In some embodiments, the color histogram is configured for representing a proportion of pixels of each color or pixels in a color range in the input image among a total number of pixels.

Exemplarily, using an input image obtained after the input image is converted from the current color space to the HSV color space as an example, a color value H in the color space is quantized, that is, continuous color values are divided into discrete intervals or "bins". Each bin represents a color range. During statistics collection, a color value of each pixel in the image is assigned to a corresponding bin, and the color histogram is constructed according to the number of pixels in each bin. The color range refers to a value range of a color value, and the number of divided color ranges may be determined according to an actual application scene. For example, each color component (red, green, and blue) of the RGB color space is divided into an equal number of intervals. Assuming that there are five color ranges, each color channel is divided into five intervals. A color is usually represented by a 6-bit hexadecimal number, and the five color ranges may be represented as: #000000 (black) to #323232, #323232 to #646464, #646464 to #989898, #989898 to #CCCCCC, and #CCCCCC to #FFFFFF (white).

Following the foregoing example, a value of a hue channel of the converted input image is [[0, 1], [1, 2]]. Statistics collection is performed on the number of pixels having different pixel values. There is one pixel value of 0, two pixel values of 1, and one pixel value of 2, to obtain proportions [0.25, 0.5, 0.25] of pixels having different pixel values among the pixels of the converted input image, i.e., a color histogram [0.25, 0.5, 0.25].

Operation 1033A: Determine, from a correspondence between candidate peaks and candidate color temperatures, the current color temperature corresponding to a peak of the color histogram.

In some embodiments, the peak of the color histogram is a hue with the largest pixel proportion in the converted input image.

Exemplarily, using an input image obtained after the input image is converted from the current color space to the HSV color space as an example, a correspondence between a hue and a color temperature of the color histogram of the converted input image is acquired. For example, when the hue is 0, a corresponding color temperature is 3,000 K, and when the hue is 30, a corresponding color temperature is 3,500 K. It is determined that the peak of the color histogram is 30, i.e., a hue whose value is 30. It is obtained from a correspondence between the hue and the color temperature that the current color temperature corresponding to the peak of the color histogram is 3,500 K.

In some embodiments, FIG. 3F is a sixth schematic flowchart of an image processing method according to an embodiment of this application. The determining a color temperature error rate of the input image based on the expected color temperature and the current color temperature in operation 103 of FIG. 3A may be implemented through operation 1031B to operation 1032B in FIG. 3F.

Operation 1031B: Acquire a difference between the expected color temperature and the current color temperature.

Exemplarily, the expected color temperature is 3,500 K, the current color temperature is 3,000 K, and it is determined that the difference between the expected color temperature and the current color temperature is 500 K.

Operation 1032B: Determine the color temperature error rate of the input image based on the difference.

In some embodiments, the color temperature error rate of the input image is determined in one of the following ways: determining a ratio of the difference to the current color temperature as the color temperature error rate of the input image; and determining a ratio of a square of the difference to a square of the current color temperature as the color temperature error rate of the input image.

Exemplarily, the current color temperature is 3,000 K, and it is determined that the difference between the expected color temperature and the current color temperature is 500 K. A ratio of 0.6 of the difference to the current color temperature is determined as the color temperature error rate of the input image, or a ratio of 0.36 of the square of the difference to the square of the current color temperature is determined as the color temperature error rate of the input image.

According to this embodiment of this application, histogram statistics is performed on the image to obtain the current color temperature of the image, so that the ambient color temperature can be accurately perceived.

Reference is still made to FIG. 3A. Operation 104: Update the first light-sensing parameter based on the color temperature error rate to obtain a second light-sensing parameter.

Exemplarily, the second light-sensing parameter is configured for adjusting the color temperature of the input image. Updating the first light-sensing parameter based on the color temperature error rate refers to determining an adjustment factor through the color temperature error rate and using a product of the adjustment factor and the first light-sensing parameter as the second light-sensing parameter, or determining, according to the color temperature error rate, a color temperature learning rate having a correspondence, and updating the first light-sensing parameter according to the color temperature learning rate.

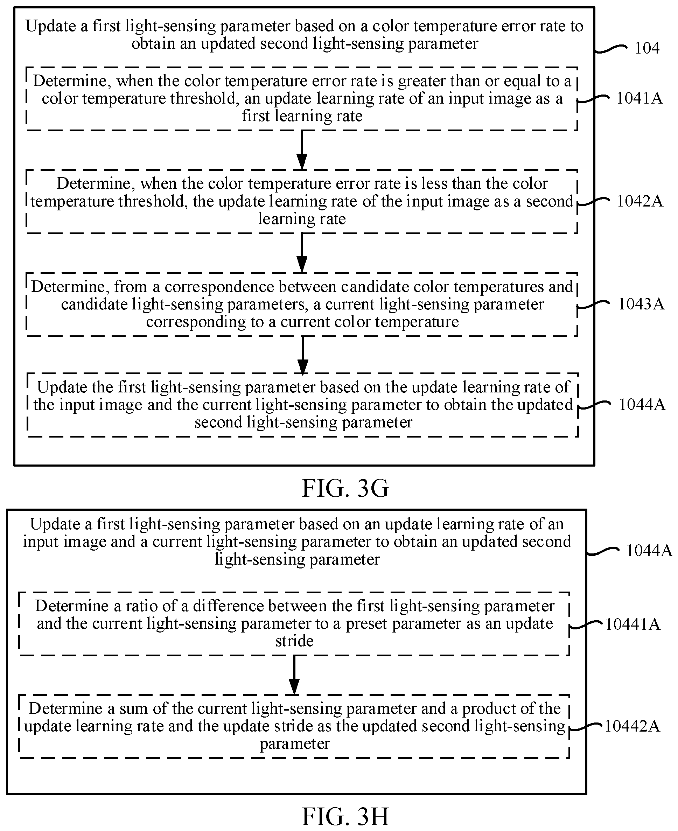

In some embodiments, FIG. 3G is a seventh schematic flowchart of an image processing method according to an embodiment of this application. Operation 104 shown in FIG. 3A may be implemented through operation 1041A to operation 1044A in FIG. 3G. Details are described below.

Operation 1041A: Determine, when the color temperature error rate is greater than or equal to a color temperature threshold, an update learning rate of the input image as a first learning rate.

In some embodiments, when the color temperature error rate is greater than or equal to the color temperature threshold, a difference between the color temperature of the current input image and the expected color temperature is relatively large. The current light-sensing parameter of the current input image is adjusted through the first learning rate, and using a relatively large learning rate may increase an update amplitude of the current light-sensing parameter of the current input image, thereby reducing color casts of the image caused by a relatively low light-sensing parameter.

Exemplarily, the color temperature error rate is 0.6, and the color temperature threshold is 0.5. Since the color temperature error rate is greater than the color temperature threshold, the update learning rate of the input image is determined as the relatively large learning rate of 0.6.

Operation 1042A: Determine, when the color temperature error rate is less than the color temperature threshold, the update learning rate of the input image as a second learning rate.

In some embodiments, the second learning rate is less than the first learning rate. When the color temperature error rate is less than the color temperature threshold, the difference between the color temperature of the current input image and the expected color temperature is relatively small. The current light-sensing parameter of the current input image is adjusted through the second learning rate, and using a relatively small learning rate may reduce the update amplitude of the current light-sensing parameter of the current input image.

Exemplarily, the color temperature error rate is 0.3, and the color temperature threshold is 0.5. Since the color temperature error rate is less than the color temperature threshold, the update learning rate of the input image is determined as the relatively small learning rate of 0.2.

Operation 1043A: Determine, from a correspondence between the candidate color temperatures and the candidate light-sensing parameters, a current light-sensing parameter corresponding to the current color temperature.

Exemplarily, the correspondence between the candidate color temperatures and the candidate light-sensing parameters is acquired. For example, when the light-sensing parameter is 0.7, a corresponding color temperature is 3,000 K. When the light-sensing parameter is 0.8, a corresponding color temperature is 3,500 K. When the current color temperature is 3,500 K, it is determined that the current light-sensing parameter corresponding to the current color temperature is 0.8.

Operation 1044A: Update the first light-sensing parameter based on the update learning rate of the input image and the current light-sensing parameter to obtain the second light-sensing parameter.

In some embodiments, the update learning rate of the input image is configured for controlling a stride of updating the light-sensing parameter. A larger update learning rate indicates a faster update speed of the light-sensing parameter, and a smaller update learning rate indicates a slower update speed of the light-sensing parameter.

In some embodiments, FIG. 3H is an eighth schematic flowchart of an image processing method according to an embodiment of this application. Operation 1044A shown in FIG. 3G may be implemented through operation 10441A to operation 10442A in FIG. 3H. Details are described below.

Operation 10441A: Determine a ratio of a difference between the light-sensing parameter and the current light-sensing parameter to the preset parameter as an update stride.

In some embodiments, the update stride is configured for dynamically adjusting the light-sensing parameter according to a change amount of the light-sensing parameter and the preset parameter.

Exemplarily, the light-sensing parameter is 1.2, the current light-sensing parameter is 0.2, and the preset parameter is 100. It is determined that the ratio of the difference between the light-sensing parameter and the current light-sensing parameter to the preset parameter is 0.01, and 0.01 is determined as the update stride, so as to adjust the light-sensing parameter more precisely.

In some embodiments, the preset parameter is determined as the update stride.

Operation 10442A: Determine a sum of the current light-sensing parameter and a product of the update learning rate and the update stride as the second light-sensing parameter.

Exemplarily, the current light-sensing parameter is 0.2, the update stride is 0.01, the update learning rate is 0.6, and a sum of 0.206 of the current light-sensing parameter and the product of the update learning rate and the update stride is determined as the second light-sensing parameter.

According to this embodiment of this application, the light-sensing parameter is dynamically adjusted through an adaptive update learning rate, so that the light-sensing parameter converges to an optimal solution more quickly, thereby further improving the effect of light-sensing parameter update.

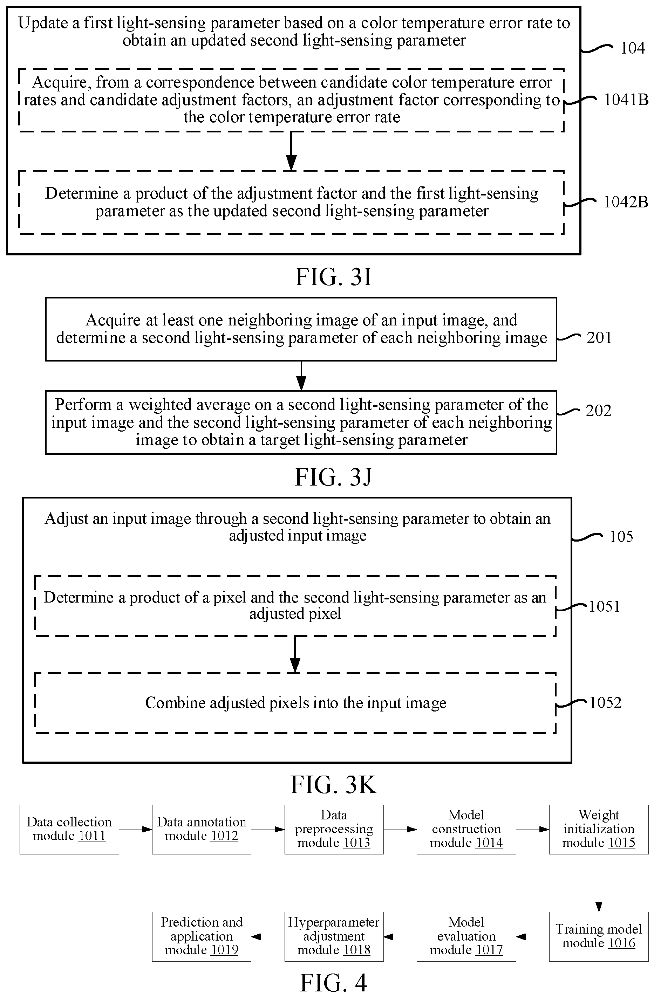

In some embodiments, FIG. 3I is a ninth schematic flowchart of an image processing method according to an embodiment of this application. Operation 104 shown in FIG. 3A may be implemented through operation 1041B to operation 1042B in FIG. 3I. Details are described below.

Operation 1041B: Acquire, from a correspondence between candidate color temperature error rates and candidate adjustment factors, an adjustment factor corresponding to the color temperature error rate.

The adjustment factor is directly proportional to the color temperature error rate.

In some embodiments, a correspondence between the color temperature error rates and the adjustment factors is acquired. For example, when the color temperature error rate is 0.1, a corresponding adjustment factor is 1.10. When the color temperature error rate is 0.2, a corresponding adjustment factor is 1.2. When the color temperature error rate increases, the adjustment factor is increased to correct the light-sensing parameter.

Operation 1042B: Determine a product of the adjustment factor and the first light-sensing parameter as the second light-sensing parameter.

In some embodiments, the adjustment factor is configured for reducing a color temperature error rate of the adjusted input image that is obtained by adjusting the input image based on the second light-sensing parameter.

Exemplarily, if the current light-sensing parameter is 0.6, and the adjustment factor is 1.12, the second light-sensing parameter is 0.6 multiplied by 1.12, i.e., 0.672.

According to this embodiment of this application, the adjustment factor corresponding to the current color temperature error rate is determined based on the correspondence between the candidate color temperature error rates and the candidate adjustment factors, to reduce the color temperature error rate of the image obtained after the input image is adjusted based on the adjustment factor. The adjustment factor is determined according to the correspondence between the color temperature error rates and the adjustment factors, and the product of the first light-sensing parameter and the adjustment factor is used as the second light-sensing parameter, so that the efficiency of calculating the second light-sensing parameter can be improved, and calculation resources can be saved.

Reference is still made to FIG. 3A. Operation 105: Adjust the input image through the second light-sensing parameter to obtain an adjusted input image.

Exemplarily, adjusting the input image refers to adjusting pixel values of pixels in the input image through the second light-sensing parameter.

In some embodiments, the following processing is performed for any domain. FIG. 3J is a tenth schematic flowchart of an image processing method according to an embodiment of this application. Before operation 105, operation 201 to operation 202 in FIG. 3J are performed.

Operation 201: Acquire at least one neighboring image of the input image, and determine a second light-sensing parameter of each neighboring image.

In some embodiments, the neighboring images may be preceding and succeeding frames of images of the input image in a time sequence, or images of the same scene captured from different viewing angles relative to the input image. A manner for acquiring the neighboring image is not limited in this embodiment of this application.

In some embodiments, the second light-sensing parameter of each neighboring image is determined according to the method for acquiring the second light-sensing parameter of the input image.

Operation 202: Perform a weighted average on the second light-sensing parameter of the input image and the second light-sensing parameter of each neighboring image to obtain a target light-sensing parameter.

Exemplarily, using an input image in an RGB color space as an example, the second light-sensing parameter of the input image is [1.2, 1, 1.5], and the second light-sensing parameter of the neighboring image is [1, 0.8, 1.3]. When the second light-sensing parameter of the input image and the second light-sensing parameter of the neighboring image have a same weight, that is, the weight of the second light-sensing parameter of the input image and the weight of the second light-sensing parameter of the neighboring image are each 0.5, the target light-sensing parameter [1.1, 0.9, 1.4] is obtained.

Following the foregoing example, when the second light-sensing parameter of the input image and the second light-sensing parameter of the neighboring image have different weights, the weight of the second light-sensing parameter of the input image is 0.4, and the weight of the second light-sensing parameter of the neighboring image is 0.6, the target light-sensing parameters [1.08, 0.88, 1.38] are obtained.

In some embodiments, the input image is adjusted through the target light-sensing parameter to obtain the adjusted input image.

Following the foregoing embodiment, the following processing is performed on each pixel of the input image: determining a product of the pixel and the target light-sensing parameter as an adjusted pixel; and combining adjusted pixels into the input image.

In some embodiments, the following processing is performed on each pixel of the input image. FIG. 3K is an eleventh schematic flowchart of an image processing method according to an embodiment of this application. Operation 105 shown in FIG. 3A may be implemented through operation 1051 to operation 1052 in FIG. 3K. Details are described below.

Operation 1051: Determine a product of the pixel and the second light-sensing parameter as an adjusted pixel.

In some embodiments, a product of a pixel value of a pixel in each color channel and a third light-sensing parameter corresponding to each color channel is determined as the adjusted pixel.

Exemplarily, a value of a pixel in an RGB color space is [10, 10, 20], third light-sensing parameters corresponding to color channels include a third light-sensing parameter 1.2 of a red color channel, a third light-sensing parameter 1 of a green color channel, and a third light-sensing parameter 1.5 of a blue color channel, and it is obtained that adjusted pixel values of the pixel in the color channels are 12, 10, and 15, respectively, and adjusted pixels [12, 10, 30] are obtained.

Operation 1052: Combine adjusted pixels into the input image.

In some embodiments, a pixel combination order of the input image is equivalent to an order of adjusting the pixels.

According to this embodiment of this application, the light-sensing parameter is continuously adjusted to cover a current color temperature scene, thereby avoiding color casts of the input image under some high-color-temperature or low-color-temperature conditions.

In some embodiments, the image processing method provided in this embodiment of this application may be implemented through a convolutional neural network. Before operation 101, the following processing is performed: acquiring a sample image set; training the convolutional neural network based on the sample image set to obtain a trained convolutional neural network; invoking the trained convolutional neural network based on a first verification image to perform image processing to obtain a second verification image; determining an RGB gain value based on the second verification image; and retraining, when the RGB gain value is less than a preset gain value, the convolutional neural network.

The convolutional neural network includes an image feature extraction layer, an encoder, and a decoder. The encoder and the decoder form a light-sensing parameter prediction model. The image feature extraction layer may include a lightweight convolutional neural network, and is configured to determine a region of interest (ROI) in an input image. The encoder is configured to determine a first light-sensing parameter of the ROI. The decoder is configured to determine a color temperature error rate and adjust the first light-sensing parameter to obtain a second light-sensing parameter.

Exemplarily, a parameter optimization manner of the convolutional neural network may be maximizing an evidence lower bound (ELBO) of marginal log-likelihood. Parameters of the encoder and the decoder are alternately optimized, so that a generated distribution p(x|z) can be as close to a posterior distribution q(z|x) as possible. Thus, the ELBO is close to a true value of the marginal log-likelihood.

In some embodiments, the image processing method provided in this embodiment of this application may be applied to the following scenes.
1. Perform payment through biometric features. The biometric feature may be a face, a palm, or an iris. After collecting a first biometric feature image, a terminal device processes the first biometric feature image through the image processing method provided in this embodiment of this application, and adjusts a color temperature of the first biometric feature image to obtain a second biometric feature image. The terminal device compares the second biometric feature image with authenticated biometric features corresponding to a payment account, and when determining that biometric features in the second biometric feature image are the authenticated biometric features, performs the payment operation. The color temperature of the first biometric feature image is adjusted, so that the user can accurately collect the biometric features in some environments with a poor color temperature, thereby improving the payment efficiency.
2. Swipe an access control through biometric features. The biometric feature may be a face, a palm, or an iris. After collecting a first biometric feature image, an access control device processes the first biometric feature image through the image processing method provided in this embodiment of this application, and adjusts a color temperature of the first biometric feature image to obtain a second biometric feature image. The access control device compares the second biometric feature image with registered biometric features stored in a database, and when determining that biometric features in the second biometric feature image are the registered biometric features in the database, grants the user access. Application scenes of the access control include, but are not limited to, night and dark places. By adjusting the color temperature of the first biometric feature image, the biometric features can also be accurately collected in an environment with an extreme color temperature, thereby improving the response efficiency of the access control device, and facilitating use.

In the embodiments of this application, light-sensing parameter prediction is performed on the input image to obtain the first light-sensing parameter of the input image. From the correspondence between the candidate light-sensing parameters and the candidate expected color temperatures, the expected color temperature corresponding to the light-sensing parameter is determined, and the color temperature error rate of the input image is determined based on the expected color temperature and the current color temperature. The first light-sensing parameter is updated based on the color temperature error rate to obtain the second light-sensing parameter. The input image is adjusted through the second light-sensing parameter to obtain the adjusted input image. In this way, by updating the first light-sensing parameter, color temperature adjustment can be performed on input images in some extreme color temperature environments, thereby improving the accuracy of the image color temperature.

Exemplary application of the image processing method provided in the embodiments of this application in an actual application scene will be described below.

In the related art, a palm-scan device performs color temperature adjustment based on a camera module ISP, which fails to accurately perceive the ambient color temperature. In addition, a set of white balance parameters (i.e., light-sensing parameters) is adopted to cover all color temperature scenes, resulting in color casts of a palm picture under some high-color-temperature or low-color-temperature conditions. Consequently, palm scanning is unavailable.

To resolve the foregoing problem, the embodiments of this application provide an image processing method, to improve the accuracy of the color temperature of palm scanning. Based on a white balance algorithm, a convolutional neural network and an ambient color temperature perception method are fused to improve the accuracy of the color temperature during palm scanning.

Palm-scan image correction is used as an example. FIG. 4 is a schematic flowchart of palm-scan image correction according to an embodiment of this application. The procedure of the palm-scan image correction according to an embodiment of this application is explained and described below.

In FIG. 4, FIG. 4 contains a plurality of modules configured to perform palm-scan image correction according to this embodiment of this application, such as a data collection module 101, a data annotation module 102, a data preprocessing module 103, a model construction module 104, a weight initialization module 105, a training model module 106, a model evaluation module 107, a hyperparameter adjustment module 108, and a prediction and application module 109. The data collection module 101, the data annotation module 102, the data preprocessing module 103, the model construction module 104, the weight initialization module 105, the training model module 106, and the model evaluation module 107 are configured to generate light-sensing parameters, and generate white balance parameters through a convolutional neural network. The modules are described in detail below.

### 1) Data collection module 101

The data collection module 101 is configured to collect data. The procedure of data collection is described in detail below.

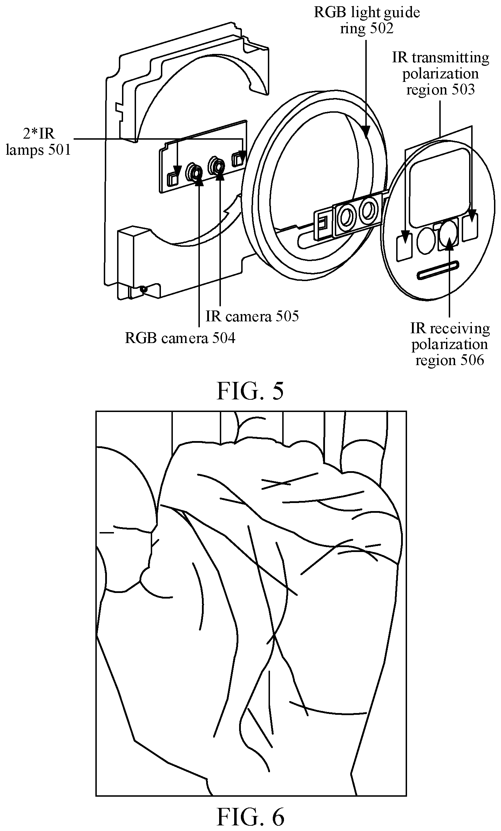

First, a target gesture (for example, a left hand or a right hand) is determined, and palm pictures of a particular number are collected. A to-be-collected palm print is collected through a camera collector to obtain a palm picture. The camera collector and the to-be-collected palm print are shown in FIG. 5 and FIG. 6, respectively. FIG. 5 is a schematic diagram of a camera collector according to an embodiment of this application. The camera collector includes the following components: 2*infrared radiation (IR) lamps 501, an RGB light guide ring 502, IR transmitting polarization regions 503, an IR RGB camera 504, an IR camera 505, and IR receiving polarization regions 506. Through the foregoing components, the camera collector can be adapted to different environments. FIG. 6 is a schematic diagram of a to-be-collected palm print according to an embodiment of this application. FIG. 6 shows at least a part of a palm print of a human palm.

Second, a negative sample gesture (for example, when the target gesture is a left hand, a corresponding right hand is a negative sample gesture; or when the target gesture is a right hand, a corresponding left hand is a negative sample gesture) is determined, and palm pictures in the same number as the target gesture are collected.

Third, data cleaning is performed on the collected palm pictures of the target gesture and the negative sample gesture using methods such as duplicate value searching, missing value searching, and abnormal value searching, to remove invalid files. The data cleaning method is not limited in this embodiment of this application.

### 2) Data annotation module 102

The data annotation module 102 is configured to annotate the collected palm pictures to obtain annotated palm pictures.

### 3) Data preprocessing module 103

The data preprocessing module 103 is configured to acquire, process, and extract, using a signal data processing technology, meaningful features and attributes from the palm pictures collected by the data collection module 101, and input the extracted content into a model to train the model. The procedure of data preprocessing is described in detail below.

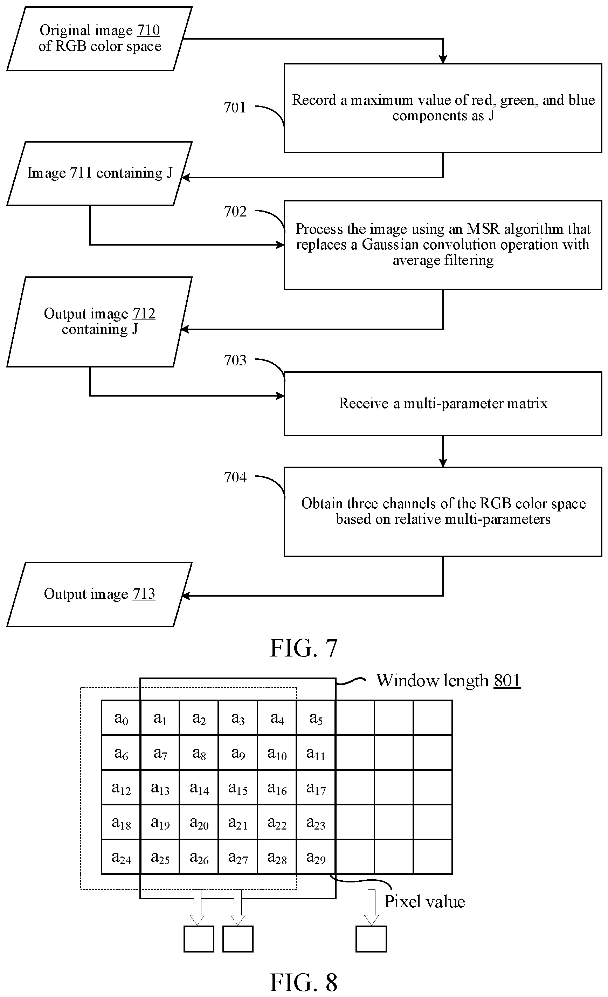

First, data enhancement is performed on the palm picture using a multi-scale retina (MSR) algorithm to obtain an enhanced palm picture, to improve a visual effect of the image and enhance useful information in the image. FIG. 7 is a principal diagram of data enhancement according to an embodiment of this application.

Exemplarily, an original image 710 in an RGB color space is acquired, operation 701 is performed based on the original image 710, and a maximum value of red, green, and blue components in the original image is recorded as J.

That is, a maximum pixel value in red, green, and blue color channels in the original image is recorded. Operation 701 outputs an image 711 containing J. Operation 702 is performed based on the image 711 containing J, i.e., processing the image using the MSR algorithm that replaces a Gaussian convolution operation with average filtering.

The maximum pixel value in the red, green, and blue color channels is adopted to normalize an image in an MSR image enhancement algorithm, to ensure better stability and robustness when the algorithm processes images of different luminance ranges. Gaussian convolution is replaced with average filtering to improve an operational speed of the MSR image enhancement algorithm. Image enhancement is performed on the original image based on the MSR image enhancement algorithm, and meanwhile, information of the image on different scales is considered, thereby enhancing the quality and details of the image more comprehensively. Operation 702 outputs an output image 712 containing J.

In operation 703, a matrix containing a plurality of related parameters is received. After operation 703, operation 704 is performed based on the output image 712 containing J, i.e., obtaining red, green, and blue channels based on relative multi-parameters in the matrix of the related parameters to determine an output image 713.

Second, median filtering cleaning is performed on the palm picture in the data collection module 101. A specific method is normalizing the palm picture and performing binarization on normalized data.

Third, a blocking and segmentation mechanism is used for the palm picture in the first operation. FIG. 8 is a principal diagram of blocking according to an embodiment of this application. As shown in FIG. 8, the palm picture is divided into blocks using a particular window length 801 (which may be adjusted, for example, 5*5). The palm picture contains a pixel value of each pixel, and is divided into several blocks and corresponding labels. The blocking mechanism herein is trained using a network model.

To avoid the situation where a palm coordinate label affects the label precision after performing feature extraction on a whole palm picture, for example, different gestures exist in one palm picture, a voting mechanism is introduced herein. After training is performed using the network model, the input image is divided into weighted blocks. The network model herein uses a lightweight convolutional network, which takes palm grayscale data values as input features, then passes through an attention layer, and finally outputs the ROI of the palm.

Histogram of oriented gradient (HOG) features are extracted with a resolution of 60x60 (the features are suitable for gesture detection). Herein, edge features of the palm picture are extracted using a sobel algorithm, as shown in formula (1) and formula (2). $M \left(x, y\right) = \sqrt{{I}_{x}^{2} + {I}_{y}^{2}}$ $θ \left(x, y\right) = {tan}^{- 1} \frac{{I}_{y}}{{I}_{x}} ∈ \left[0,360°\right) or \left[0,180°\right)$
where *Iₓ* and *I_{y}* represent gradient values in a horizontal direction and a vertical direction, M(x, y) represents an amplitude value of the gradient, and θ(x, y) represents a direction of the gradient.

Fourth, HOG features extracted from each block are concatenated end-to-end to form a large one-dimensional vector, which constitutes the final image feature. The feature may be inputted into a regression algorithm for training.

### 4) Model construction module 104

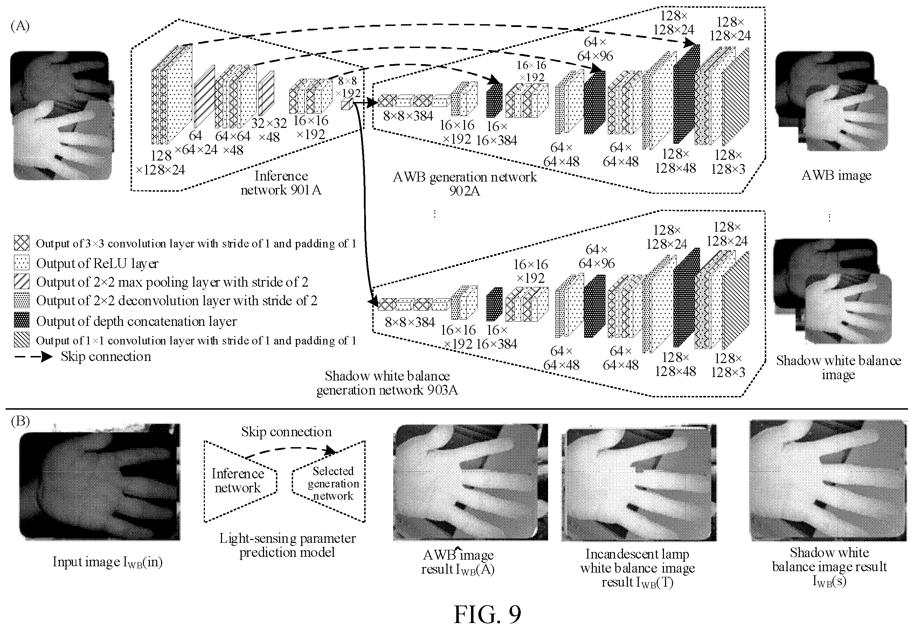

The model construction module 104 is configured to select two convolutional networks to separately construct the light-sensing parameter prediction model provided in this embodiment of this application for an inference network (i.e., an encoder) and a generation network (i.e., a decoder). FIG. 9 is a schematic diagram of model construction according to an embodiment of this application. A generation network matching a current application scene is selected from a plurality of generation networks (an auto white balance (AWB) generation network 902A, an incandescent lamp white balance generation network (not shown in the figure), and a shadow white balance generation network 903A). The generation network uses a latent vector z as an input, and outputs a parameter p(x|z) configured for observing the condition distribution. In addition, the latent vector z is modeled using a unit Gaussian prior p(z).

The generation network includes a fully-connected layer followed by four transposed convolution layers (deconvolution layers), and a network architecture of the generation network is as follows. A first layer is an input layer. A second layer is a fully-connected layer, and an activation function uses a rectified linear unit (ReLU). A third layer is a resampling layer, and performs shape change (resharp) on input features of the second layer to obtain an updated feature dimension (batch_size, 7, 7, 32). A fourth layer is a deconvolution layer, and uses 64 convolution kernels. A size of the convolution kernel is 3x3, a stride is 2, padding is SAME, and an activation function is ReLU. A fifth layer is a deconvolution layer, and uses 32 convolution kernels. A size of the convolution kernel is 3x3, a stride is 2, padding is SAME, and an activation function is ReLU. A sixth layer is a deconvolution layer, and uses 16 convolution kernels. A size of the convolution kernel is 3x3, a stride is 2, padding is an appropriate filling manner (SAME), and an activation function is ReLU. A seventh layer is a deconvolution layer, and uses one convolution kernel. A size of the convolution kernel is 3x3, a stride is 1, padding is SAME, and an activation function is a linear function f(x).

An inference network 901A is configured to obtain a posterior distribution q(z|x). The posterior distribution uses an observed value as an input and outputs a set of parameters for the condition distribution of the latent representation. The inference network 901A includes three convolution layers and one fully-connected network layer. A network architecture of the inference network 901A is as follows. A first layer is an input layer. A second layer is a convolution layer, and uses 16 convolution kernels. A size of the convolution kernel is 3x3, a stride is 2, padding is SAME, and an activation function is ReLU. A third layer is a convolution layer, and uses 32 convolution kernels. A size of the convolution kernel is 3x3, a stride is 2, padding is SAME, and an activation function is ReLU. A fourth layer is a convolution layer, and uses 64 convolution kernels. A size of the convolution kernel is 3x3, a stride is 2, padding is SAME, and an activation function is ReLU. A fifth layer is a fully-connected layer.

### 5) Weight initialization module 105

The weight initialization module 105 is configured to initialize a weight using a random value less than a weight threshold, to avoid output saturation caused by a weight value greater than the weight threshold when training of the model starts. Weight initialization methods include zero initialization (initializing all weights to zero), random number initialization (initializing the weight to a random value less than the weight threshold, usually from a uniform distribution or a normal distribution), and the like. The selection of the weight initialization method is not limited in this application.

### 6) Training model module 106

The training model module 106 is configured to start, according to the model selected by the model construction module 104, training based on a parameter and data required to satisfy the network model. During training, batch normalization is avoided because mini-batch processing introduces additional randomness, thereby exacerbating instability in random sampling. A model training process is described in detail below.

First, a loss function and an optimizer of the model are defined.

Second, training is performed by maximizing the ELBO of the marginal log-likelihood, as shown in formula (3): $log \left(p\left(x\right)\right) \geq ELBO = {E}_{q \left(Z\left|X\right.\right)} \left[log\frac{p \left(x, z\right)}{q \left(Z\left|X\right.\right)}\right]$

The model is trained from an iterative dataset. During each iteration, an image is transmitted to the inference network to obtain a set of average values and logarithmic variance parameters of an approximate posterior q(z|x). The average value and the variance are configured for reducing oscillations. A reparameterization trick is applied to sample from q(z|x), and a reparameterized sample is transmitted to the generation network to acquire a logit of the observed value of the generated distribution p(x|z). The logit represents a sample inputted into the last fully-connected layer of the generation network. Maximizing the ELBO of the marginal log-likelihood is a method used for approximating the marginal log-likelihood that cannot be directly calculated. A model parameter may be optimized by maximizing the ELBO of the marginal log-likelihood. Parameters of the encoder and the decoder are alternately optimized, so that the generated distribution p(x|z) can be as close to the posterior distribution q(z|x) as possible. Thus, the ELBO is close to the true value of the marginal log-likelihood.

### 7) Model evaluation module 107

The model evaluation module 107 is configured to input the input image into a model that is trained through the training model module 106 and that is configured to generate pictures; and sample a set of latent vectors z from the unit Gaussian prior distribution p(z). The generation network converts the latent vector into the logit of the observed value to obtain a probability distribution p(x|z). The probability distribution p(x|z) is used as an RGB gain of a white balance parameter (light-sensing parameter) corresponding to the input image.

### 8) Hyperparameter adjustment module 108

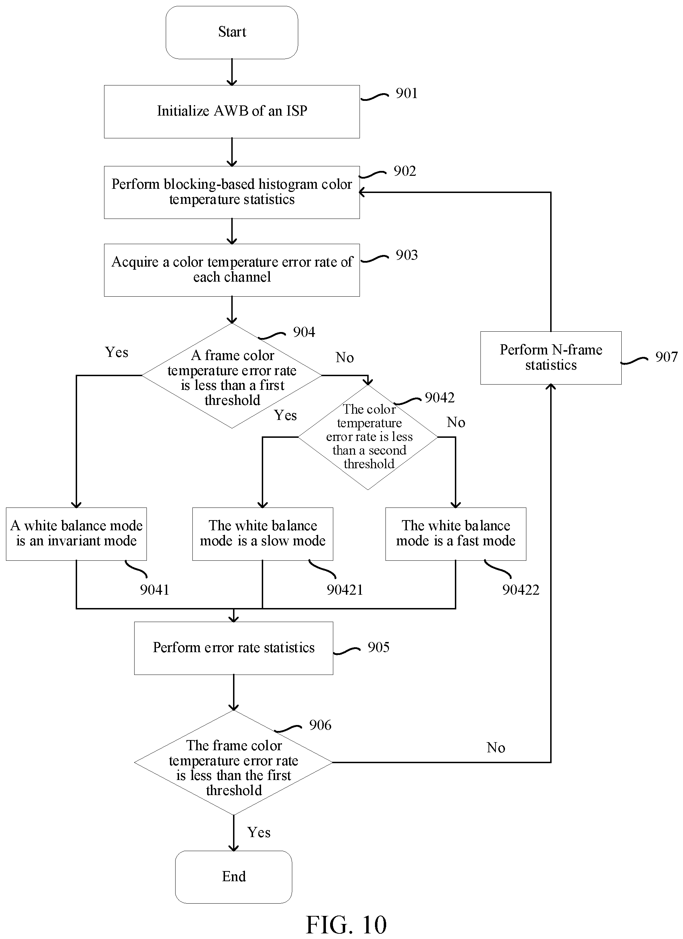

The hyperparameter adjustment module 108 is configured to update a white balance parameter of an image. FIG. 10 is a principal diagram of parameter update according to an embodiment of this application.

As shown in FIG. 10, in operation 901, AWB parameters in an ISP in a camera are initialized. The white balance parameters are configured for restoring, through a particular algorithm, white obtained after imaging in ambient light of different color temperatures to true white (usually white observed by human eyes in natural sunlight ambient light).

In operation 902, blocking-based histogram color temperature statistics are performed on the input image. The white balance parameter is obtained through the model evaluation module 107, and the input image is inputted into an ambient color temperature perception and estimation module 1101. In the ambient color temperature perception and estimation module 1101, performing blocking-based histogram color temperature statistics on the input image in operation 902 and acquiring a color temperature error rate of each channel in operation 903 are performed.

### 9) Ambient color temperature perception and estimation module 1101

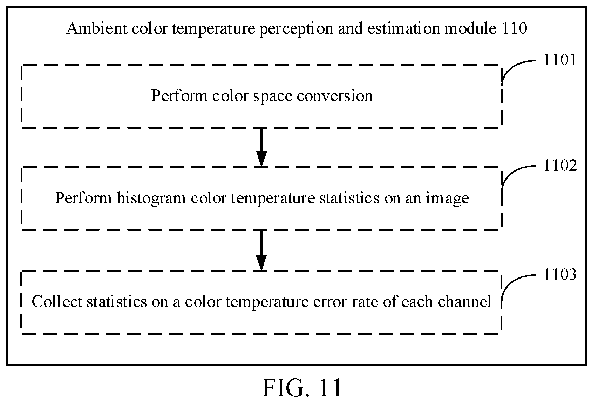

The ambient color temperature perception and estimation module 1101 is configured to acquire a current color temperature of an image. FIG. 11 is a schematic diagram of ambient color temperature perception and estimation according to an embodiment of this application. Different from conventional grayscale world assumption and white point estimation, the ambient color temperature perception and estimation module 1101 performs color temperature estimation based on color constancy. Color constancy characteristics of a human visual system are simulated, that is, the stable perception of the color is maintained under different lighting conditions. The procedure of the ambient color temperature perception and estimation module 1101 is described in detail below.

Operation 1101: Perform color space conversion.

An image is converted from its original color space (which is usually RGB) to a color space more suitable for white balance processing, such as a coordinate (XYZ) color space or a luminance-chrominance (Lab) color space formulated by the International Commission on Illumination (CIE). A method for converting an image from the HSV color space to the RGB color space is shown in the following formula (4): $\begin{matrix}f = \left(H/60\right) - I \\ a = V * \left(1-S\right) \\ b = V * \left(1-S*f\right) \\ c = V * \left(1-S*\left(1-f\right)\right) \\ R = V , G = c , B = a ; ifi = 0 \\ R = b , G = V , B = a ; ifi = 1 \\ R = a , G = V , B = c ; ifi = 2 \\ R = a , G = b , B = V ; ifi = 3 \\ R = c , G = a , B = V ; ifi = 4 \\ R = V , G = a , B = b ; ifi = 5\end{matrix}$
where i = get the integer of (H/60), and represents an integer part of H/60. A value range of the hue (H) in the HSV color space is usually 0° to 360°, and value ranges of the saturation (S) and the value (V) are usually 0 to 1. An intermediate variable is calculated according to the hue (H), the saturation (S), and the value (V), and values of red (R), green (G), and blue (B) corresponding to color channels in a corresponding RGB color space are obtained, thereby realizing mutual conversion between the HSV color space and the RGB color space. When the scene focuses on the color of the image, the image is converted to the HSV space. When the scene focuses on the luminance of the image, the image is converted to the Lab space.

Operation 1102: Perform histogram color temperature statistics on an image.

The image is equally divided into 8*8 blocks, histogram color temperature statistics are performed on the divided image, and a light source color temperature (current color temperature) of a current scene is estimated.

Operation 1103: Collect statistics on a color temperature error rate of each channel.

Based on the current color temperature and the white balance parameter of the input image obtained through the model evaluation module 107, an expected color temperature of the input image is determined according to the white balance parameter, and statistics collection is performed on the color temperature error rate of each channel based on the current color temperature and the expected color temperature.

Still referring to FIG. 10, color temperature error rates of N frames are determined as a frame color temperature error rate, N being an integer greater than 1. Weighted summation is performed on the color temperature error rates of the N frames to obtain the frame color temperature error rate. In operation 904, a magnitude relationship between the frame color temperature error rate and a first threshold is determined. When the frame color temperature error rate is less than the first threshold, determining a white balance model as an invariant mode in operation 9041 is performed, and the current color temperature is maintained. When the frame color temperature error rate is greater than the first threshold, operation 9042 of determining a magnitude relationship between the color temperature error rate of the image and a second threshold is performed. When the color temperature error rate of the picture is greater than the second threshold, determining the white balance model as a slow mode in operation 90421 is performed, and a corresponding color temperature parameter is adjusted. A white balance parameter value corresponding to the white balance model in the slow mode is acquired. When the color temperature error rate of the picture is less than the second threshold, determining the white balance model as a fast mode in operation 90422 is performed, and a corresponding color temperature parameter is adjusted. A white balance parameter value corresponding to the white balance model in the fast mode is acquired. That is, when the color temperature error rate is larger, the white balance parameter is adjusted faster.

In operation 905, the input image is updated based on the white balance parameter value in a corresponding white balance mode, error rate statistics are re-performed on the updated input image, and color temperature error rates of a plurality of frames of images are calculated to obtain the frame color temperature error rate. In operation 906, a magnitude relationship between the frame color temperature error rate and the first threshold is determined. When the frame color temperature error rate is still greater than or equal to the first threshold, N-frame statistics in operation 907 are performed to determine N frames of adjusted images, N being a positive integer greater than 1, and image color temperature adjustment is re-performed on the N frames of adjusted input images, until it is determined, in operation 906 of determining a magnitude relationship between the frame color temperature error rate and the first threshold, that the frame color temperature error rate is less than the first threshold.

### 10) Application module 109

The application module 109 is configured to perform color temperature adjustment on input data through the palm-scan image correction method provided in this embodiment of this application to obtain an adjusted input image, thereby further improving the accuracy of the image color temperature.

In summary, in the embodiments of this application, histogram statistics are performed on the input image to obtain the current color temperature corresponding to the input image, thereby improving the accuracy of estimating the current color temperature of the image. In addition, the white balance parameter is continuously adjusted. Color temperature adjustment can be performed on the input data in an extreme color temperature environment through the adjusted white balance parameter, covering a plurality of color temperature scenes, and improving the accuracy of the image color temperature.

The following continues to describe an exemplary structure in which an image processing apparatus 555 provided in the embodiments of this application is implemented as software modules. In some embodiments, as shown in FIG. 2, the software modules in the image processing apparatus 555 stored in the memory 550 may include:
a light-sensing prediction module 5551, configured to perform light-sensing parameter prediction on an input image to obtain a first light-sensing parameter of the input image;
a color temperature error rate acquisition module 5552, configured to determine, from a correspondence between candidate light-sensing parameters and candidate expected color temperatures, an expected color temperature corresponding to the light-sensing parameter; and determine a current color temperature of the input image, and determine a color temperature error rate of the input image based on the expected color temperature and the current color temperature; and
an image update module 5553, configured to update the first light-sensing parameter based on the color temperature error rate to obtain a second light-sensing parameter; and adjust the input image through the second light-sensing parameter to obtain an adjusted input image.

In some embodiments, the light-sensing prediction module 5551 is further configured to map the input image to obtain a probability distribution of the input image in a latent space; sample a latent space sample from the latent space, and remap the latent space sample to obtain predicted features corresponding to the input image, the latent space sample conforming to the probability distribution of the input image in the latent space; and determine the first light-sensing parameter of the input image based on the predicted features corresponding to the input image.

In some embodiments, the light-sensing prediction module 5551 is further configured to perform the following processing on each color channel in a color space corresponding to the predicted features: determining a first probability distribution of the predicted features in each color channel, the first probability distribution being configured for representing proportions of pixels having different pixel values among pixels of the predicted features in each color channel; determining a pixel value having a maximum probability in the first probability distribution corresponding to each color channel as a target pixel value; and determining a reciprocal of the target pixel value as the first light-sensing parameter of the input image.

In some embodiments, the light-sensing prediction module 5551 is further configured to map the predicted features to obtain a second probability distribution of the input image, the second probability distribution being configured for representing a weight of a third light-sensing parameter of each color channel corresponding to the input image; determine, from the second probability distribution, a target weight of a third light-sensing parameter of a target color channel; determine a ratio of a preset parameter to the target weight as a light-sensing parameter coefficient; and perform the following processing on each color channel in a color space corresponding to the input image: determine a product of the light-sensing parameter coefficient and the weight of the third light-sensing parameter corresponding to each color channel as the first light-sensing parameter of the input image.

In some embodiments, the color temperature error rate acquisition module 5552 is further configured to convert the input image from a current color space to a target color space to obtain a converted input image; perform color histogram statistics on the converted input image to obtain a color histogram corresponding to the input image; and determine, from a correspondence between candidate peaks and candidate color temperatures, the current color temperature corresponding to a peak of the color histogram.

In some embodiments, the color temperature error rate acquisition module 5552 is further configured to acquire a difference between the expected color temperature and the current color temperature; and determine the color temperature error rate of the input image based on the difference.

In some embodiments, the color temperature error rate acquisition module 5552 is further configured to determine the color temperature error rate of the input image in one of the following ways: determining a ratio of the difference to the current color temperature as the color temperature error rate of the input image; and determining a ratio of a square of the difference to a square of the current color temperature as the color temperature error rate of the input image.

In some embodiments, the image update module 5553 is further configured to determine, when the color temperature error rate is greater than or equal to a color temperature threshold, an update learning rate of the input image as a first learning rate; determine, when the color temperature error rate is less than the color temperature threshold, the update learning rate of the input image as a second learning rate; determine, from a correspondence between the candidate color temperatures and the candidate light-sensing parameters, a current light-sensing parameter corresponding to the current color temperature; and update the first light-sensing parameter based on the update learning rate of the input image and the current light-sensing parameter to obtain the second light-sensing parameter.

In some embodiments, the image update module 5553 is further configured to determine a ratio of a difference between the light-sensing parameter and the current light-sensing parameter to the preset parameter as an update stride; and determine a sum of the current light-sensing parameter and a product of the update learning rate and the update stride as the second light-sensing parameter.

In some embodiments, the image update module 5553 is further configured to acquire, from a correspondence between candidate color temperature error rates and candidate adjustment factors, an adjustment factor corresponding to the color temperature error rate, the adjustment factor being directly proportional to the color temperature error rate; and determine a product of the adjustment factor and the first light-sensing parameter as the second light-sensing parameter.

In some embodiments, the image update module 5553 is further configured to perform the following processing on each pixel of the input image: determining a product of the pixel and the second light-sensing parameter as an adjusted pixel; and combining adjusted pixels into the input image.

In some embodiments, the image update module 5553 is further configured to acquire at least one neighboring image of the input image, and determine a second light-sensing parameter of each neighboring image; and perform a weighted average on the second light-sensing parameter of the input image and the second light-sensing parameter of each neighboring image to obtain a target light-sensing parameter.

In some embodiments, the image update module 5553 is further configured to adjust the input image through the target light-sensing parameter to obtain the adjusted input image.

The embodiments of this application provide a computer program product, including computer-executable instructions, and the computer-executable instructions are stored in a computer-readable storage medium. A processor of an electronic device reads the computer-executable instructions from the computer-readable storage medium and executes the computer-executable instructions to cause the electronic device to perform the foregoing image processing method according to the embodiments of this application.

The embodiments of this application provide a computer-readable storage medium, having computer-executable instructions stored therein. The computer-readable storage medium has computer-executable instructions or a computer program stored therein. When the computer-executable instruction or the computer program is executed by a processor, the processor is enabled to perform the image processing method provided in the embodiments of this application, for example, the image processing method shown in FIG. 3A to FIG. 3K.

In some embodiments, the computer-readable storage medium may be a memory such as a RAM, a ROM, a flash memory, a magnetic surface memory, a CD, or a CD-ROM, or may be any device including one of or any combination of the foregoing memories.

In some embodiments, the computer-executable instruction may be written in the form of program, software, software module, script, or code in any form of programming language (including compilation or interpretation language, or declarative or procedural language), and may be deployed in any form, including being deployed as an independent program or being deployed as a module, assembly, subroutine, or another unit suitable for use in a computing environment.

As an example, the computer-executable instruction may but may not necessarily correspond to a file in a file system, may be stored in a part of the file for storing other programs or data, for example, stored in one or more scripts in a hyper text markup language (HTML) document, stored in a single file specially used for the discussed program, or stored in a plurality of collaborative files (for example, files storing one or more modules, a subprogram, or a code part).

As an example, the computer-executable instructions may be deployed to be executed on one electronic device, on a plurality of electronic devices located at one location, or on a plurality of electronic devices distributed at a plurality of locations and interconnected through a communication network.

In summary, according to the embodiments of this application, light-sensing parameter prediction is performed on the input image to obtain the first light-sensing parameter of the input image. From the correspondence between the candidate light-sensing parameters and the candidate expected color temperatures, the expected color temperature corresponding to the light-sensing parameter is determined, and the color temperature error rate of the input image is determined based on the expected color temperature and the current color temperature. The first light-sensing parameter is updated based on the color temperature error rate to obtain the second light-sensing parameter. The input image is adjusted through the second light-sensing parameter to obtain the adjusted input image. In this way, by updating the first light-sensing parameter, color temperature adjustment can be performed on input images in some extreme color temperature environments, thereby improving the accuracy of the image color temperature.

The foregoing descriptions are merely embodiments of this application and are not intended to limit the protection scope of this application. Any modification, equivalent replacement, or improvement made within the spirit and scope of this application falls within the protection scope of this application.

## Claims

1. An image processing method, performed by an electronic device, and comprising:
performing light-sensing parameter prediction on an input image to obtain a first light-sensing parameter of the input image;
determining, from a correspondence between candidate light-sensing parameters and candidate expected color temperatures, an expected color temperature corresponding to the first light-sensing parameter;
determining a current color temperature of the input image, and determining a color temperature error rate of the input image based on the expected color temperature and the current color temperature;
updating the first light-sensing parameter based on the color temperature error rate to obtain a second light-sensing parameter; and
adjusting the input image through the second light-sensing parameter to obtain an adjusted input image.

2. The method according to claim 1, wherein the performing light-sensing parameter prediction on an input image to obtain a first light-sensing parameter of the input image comprises:
mapping the input image to obtain a probability distribution of the input image in a latent space;
sampling a latent space sample from the latent space, and remapping the latent space sample to obtain predicted features corresponding to the input image, the latent space sample conforming to the probability distribution of the input image in the latent space; anddetermining the first light-sensing parameter of the input image based on the predicted features corresponding to the input image.

3. The method according to claim 2, wherein the determining the first light-sensing parameter of the input image based on the predicted features corresponding to the input image comprises:
performing the following processing on each color channel in a color space corresponding to the predicted features:
determining a first probability distribution of the predicted features in each color channel, the first probability distribution being configured for representing proportions of pixels having different pixel values among pixels of the predicted features in each color channel;
determining a pixel value having a maximum probability in the first probability distribution corresponding to each color channel as a target pixel value; and
determining a reciprocal of the target pixel value as the first light-sensing parameter of the input image.

4. The method according to claim 2, wherein the determining the first light-sensing parameter of the input image based on the predicted features corresponding to the input image comprises:
mapping the predicted features to obtain a second probability distribution of the input image, the second probability distribution being configured for representing a weight of a third light-sensing parameter of each color channel corresponding to the input image;
determining, from the second probability distribution, a target weight of a third light-sensing parameter of a target color channel;
determining a ratio of a preset parameter to the target weight as a light-sensing parameter coefficient; and
performing the following processing on each color channel in a color space corresponding to the input image:
determining a product of the light-sensing parameter coefficient and the weight of the third light-sensing parameter corresponding to each color channel as the first light-sensing parameter of the input image.

5. The method according to any one of claims 1 to 4, wherein the determining a current color temperature of the input image comprises:
converting the input image from a current color space to a target color space to obtain a converted input image;
performing color histogram statistics on the converted input image to obtain a color histogram corresponding to the input image; and
determining, from a correspondence between candidate peaks and candidate color temperatures, the current color temperature corresponding to a peak of the color histogram.

6. The method according to any one of claims 1 to 5, wherein the determining a color temperature error rate of the input image based on the expected color temperature and the current color temperature comprises:
acquiring a difference between the expected color temperature and the current color temperature; and
determining the color temperature error rate of the input image based on the difference.

7. The method according to claim 6, wherein the determining the color temperature error rate of the input image based on the difference comprises:
determining the color temperature error rate of the input image in one of the following ways:
determining a ratio of the difference to the current color temperature as the color temperature error rate of the input image; and
determining a ratio of a square of the difference to a square of the current color temperature as the color temperature error rate of the input image.

8. The method according to any one of claims 1 to 7, wherein the updating the first light-sensing parameter based on the color temperature error rate to obtain a second light-sensing parameter comprises:
determining, when the color temperature error rate is greater than or equal to a color temperature threshold, an update learning rate of the input image as a first learning rate;
determining, when the color temperature error rate is less than the color temperature threshold, the update learning rate of the input image as a second learning rate;
determining, from a correspondence between the candidate color temperatures and the candidate light-sensing parameters, a current light-sensing parameter corresponding to the current color temperature; and
updating the first light-sensing parameter based on the update learning rate of the input image and the current light-sensing parameter to obtain the second light-sensing parameter.

9. The method according to claim 8, wherein the updating the first light-sensing parameter based on the update learning rate of the input image and the current light-sensing parameter to obtain the second light-sensing parameter comprises:
determining a ratio of a difference between the first light-sensing parameter and the current light-sensing parameter to the preset parameter as an update stride; and
determining a sum of the current light-sensing parameter and a product of the update learning rate and the update stride as the second light-sensing parameter.

10. The method according to any one of claims 1 to 7, wherein the updating the first light-sensing parameter based on the color temperature error rate to obtain a second light-sensing parameter comprises:
acquiring, from a correspondence between candidate color temperature error rates and candidate adjustment factors, an adjustment factor corresponding to the color temperature error rate, the adjustment factor being directly proportional to the color temperature error rate; and
determining a product of the adjustment factor and the first light-sensing parameter as the second light-sensing parameter.

11. The method according to any one of claims 1 to 10, wherein the adjusting the input image through the second light-sensing parameter to obtain an adjusted input image comprises:
performing the following processing on each pixel of the input image:
determining a product of the pixel and the second light-sensing parameter as an adjusted pixel; and
combining adjusted pixels into the input image.

12. The method according to any one of claims 1 to 11, wherein
before the adjusting the input image through the second light-sensing parameter to obtain an adjusted input image, the method further comprises:
acquiring at least one neighboring image of the input image, and determining a second light-sensing parameter of each neighboring image; and
performing a weighted average on the second light-sensing parameter of the input image and the second light-sensing parameter of each neighboring image to obtain a target light-sensing parameter; and
the adjusting the input image through the second light-sensing parameter to obtain an adjusted input image comprises:
adjusting the input image through the target light-sensing parameter to obtain the adjusted input image.

13. The method according to any one of claims 1 to 12, wherein the method is implemented through a convolutional neural network; the convolutional neural network comprises an encoder and a decoder; and the encoder is configured to predict the first light-sensing parameter, and the decoder is configured to determine the color temperature error rate and adjust the first light-sensing parameter based on the color temperature error rate to obtain the second light-sensing parameter.

14. An image processing apparatus, comprising:
a light-sensing prediction module, configured to perform light-sensing parameter prediction on an input image to obtain a first light-sensing parameter of the input image;
a color temperature error rate acquisition module, configured to determine, from a correspondence between candidate light-sensing parameters and candidate expected color temperatures, an expected color temperature corresponding to the light-sensing parameter; and determine a current color temperature of the input image, and determine a color temperature error rate of the input image based on the expected color temperature and the current color temperature; and
an image update module, configured to update the first light-sensing parameter based on the color temperature error rate to obtain a second light-sensing parameter; and adjust the input image through the second light-sensing parameter to obtain an adjusted input image.

15. An electronic device, comprising:
a memory, configured to store computer-executable instructions; and
a processor, configured to implement, when executing the computer-executable instructions or a computer program stored in the memory, the image processing method according to any one of claims 1 to 13.

16. A computer-readable storage medium, having computer-executable instructions or a computer program stored therein, and the computer-executable instructions or the computer program, when executed by a processor, implementing the image processing method according to any one of claims 1 to 13.

17. A computer program product, comprising computer-executable instructions or a computer program, the computer-executable instructions or the computer program, when executed by a processor, implementing the image processing method according to any one of claims 1 to 13.
